Europäisches Patentamt

European Patent Office

Office européen des brevets

(11) Publication number: **0 096 997**
**B1**

# EUROPEAN PATENT SPECIFICATION

(45) Date of publication of patent specification: **24.09.86**

(51) Int. Cl.⁴: **A 01 N 1/02**

(21) Application number: **83303133.9**

(22) Date of filing: **01.06.83**

(54) Method of preserving organ and apparatus for preserving the same.

(30) Priority: **04.06.82 JP 95896/82**
**31.03.83 JP 56593/83**

(43) Date of publication of application:
**28.12.83 Bulletin 83/52**

(45) Publication of the grant of the patent:
**24.09.86 Bulletin 86/39**

(84) Designated Contracting States:
**CH DE FR GB LI NL SE**

(56) References cited:
**DE-A-1 938 275**
**FR-A-2 077 641**
**FR-A-2 151 092**
**GB-A-1 422 356**

**KOELTECHNIEK, vol. 67, no. 7, July 1974, pages
91-100, Nederlandse Vereniging voor
Koeltechniek, Apeldoorn, NL., A.U.SMITH:
"Twenty five years of research in low
temperature"**

(73) Proprietor: **HOXAN CORPORATION**
**2-Nishi, 1-chome Kita 3-jyo**
**Chuo-ku Sapporo-shi Hokkaido (JP)**

(72) Inventor: **Sakao, Nobuo c/o Hoxan Lab.**
**Hoxan Corp. 3-17, 2-chome 5-jyo, Kikusui**
**Shiroishi-ku Sapporo-shi Hokkaido (JP)**
Inventor: **Kuraoka, Yasuo c/o Hoxan Lab.**
**Hoxan Corp. 3-17, 2-chome 5-jyo, Kukusui**
**Shiroishi-ku Sapporo-shi Hokkaido (JP)**

(74) Representative: **Austin, Hedley William et al**
**A.A. THORNTON & CO. Northumberland House**
**303-306 High Holborn**
**London WC1V 7LE (GB)**

## Description

The present invention is concerned with the preservation of excised organs and, more particularly, with a method and apparatus for cooling and preserving excised organs for subsequent use in transplant surgery.

A method for cooling and preserving an excised organ until it is required for transplantation is already known. According to this method, choline, which has properties similar to those of blood, is supplied at about 4°C to an artery or portal vein of the organ and leaves via a vein, a procedure known as the perfusion method. The cooled organ is preserved at a temperature of about 4°C and is perfused with blood prior to transplantation. Using this method, the organ can only be preserved for about 12 hours. As a result of the short preservation time, considerable difficulties occur in matching organs with possible recipients in the short time available.

Preservation of an organ at a much lower temperature has been considered in order to increase the preservation time, but when an organ is cooled to such low temperatures by the conventional perfusion method, cell necrocytosis occurs, causing the organ to undergo meronecrosis.

We have now developed a method of preserving an organ by which the organ can be frozen without undergoing cell necrocytosis and can then be semipermanently preserved. Furthermore, by essentially reversing the steps of the freezing method, the frozen organ can be restored to body temperature without damage to the tissue.

According to the present invention, therefore, there is provided a method of cooling and preserving an excised organ which comprises:

(a) perfusing the organ with a liquid blood substitute having a freezing point of less than 2°C, the temperature of the substitute being reduced during perfusion from body temperature (37°C) to 2°C,

(b) perfusing the organ with a liquid cryoprotective agent having a freezing point of less than −4°C, the temperature of the agent being reduced during perfusion from 2°C to −4°C,

(c) perfusing the organ with an inert liquid having a freezing point of not higher than −60°C, the temperature of the liquid being reduced during perfusion from −4°C to from −60° to −80°C, the lower temperature being at or above the freezing point of the liquid, and

(d) preserving the organ at a temperature at or below that achieved in step (c) until such time as the organ is required for transplantation.

The invention also includes a method of restoring the cooled and preserved organ to body temperature prior to transplantation and an apparatus for treating an excised organ by the methods according to the invention.

The following terms used herein have the meanings indicated:

Liquid blood substitute: any artificial blood substitute with a freezing point below 2°C;

Liquid cryoprotective agent: any cryoprotective agent capable of removing the water content of cells and having a freezing point below −4°C;

Final perfusion liquid: any liquid which is physiologically inert, i.e. does not have a deleterious effect on body tissue, and has a freezing point of −60°C or below.

Suitable blood substitutes and cryoprotective agents for use in the methods of the invention will be known to those skilled in the art. A preferred liquid blood substitute for use in the methods of the invention is choline; preferred cryoprotective agents are a 15% W/W aqueous solution of dimethyl sulphoxide and an aqueous solution of glycerin; preferred final perfusion liquids are ethanol and diethyl ether.

Although the removal of water from the organ during perfusion with the cryoprotective agent deprives the terms "freezing" and "thawing" of their true meanings, these and related terms are used throughout the specification for convenience.

In order that the invention may be more fully understood, two preferred embodiments of the apparatus of the invention will now be described, by way of example, with reference to the accompanying drawings, in which:

Figure 1 is a sectional view of one preferred embodiment of an apparatus for cooling and preserving an organ according to the method of the invention; and

Figure 2 is a schematic view of part of another preferred embodiment of the apparatus according to the present invention.

The apparatus for treating an excised organ by the methods according to the invention essentially comprises a perfusion unit and a container adapted to contain the organ, the perfusion unit being provided with a means of separately supplying liquids at controlled temperatures to the container and a means of supplying gas at a controlled temperature to the container.

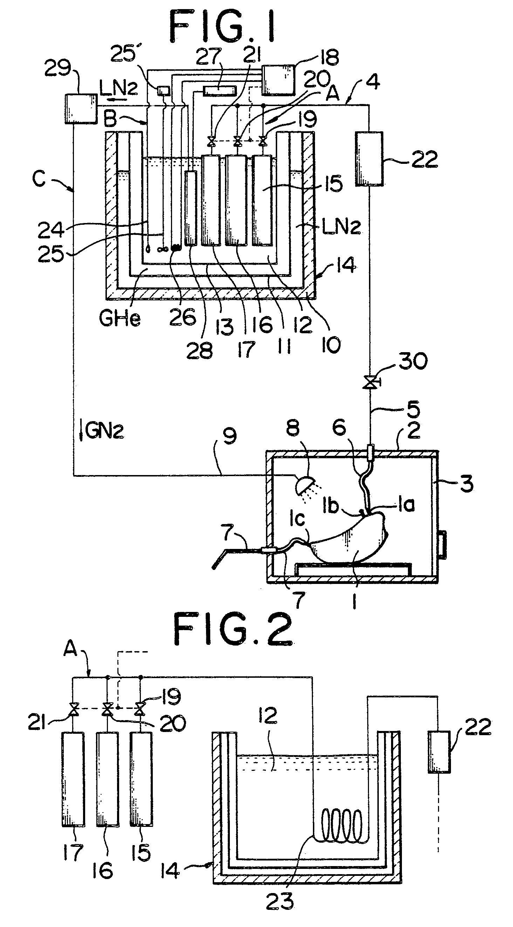

In Figure 1, a thermally insulated container 2 adapted to contain an organ 1 has a door 3. The container 2 and a perfusion freezing and thawing unit 4 are connected by a pipe 5. An inflow pipe 6 passes through the wall of the container 2 and is connected to one end of the pipe 5. The other end of pipe 6 is connected to an artery 1a or a portal vein 1b of the organ 1. An outlet pipe 7 passes through the wall of the container 2 and is connected to a vein 1c. A gas supply pipe 9 from the unit 4 is connected to a nozzle 8 which is provided in the container 2. The sealed tank 14 contains liquefied nitrogen(LN₂) between the thermally insulated outer and middle tanks 10 and 11, and helium gas (GHe) between the tank 11 and the inner tank 13; the latter contains a refrigerant 12, such as Freon (Freon is a registered Trade Mark).

A liquid control mechanism A is provided in the tank 14. In the preferred embodiment of mechanism A shown in Figure 1, the first, second and third containers 15, 16, and 17, which contain the liquid blood substitute, the liquid cryoprotective agent, and the final perfusion liquid respectively, are immersed in the refrigerant 12. First, second, and third control valves 19, 20, and 21 are provided on the outlet pipes of the containers 15, 16, and 17 respectively. These valves are opened or closed as required by a control unit 18, and the three liquids are selectively supplied to the artery 1a or portal vein 1b of the organ 1 by the operation of a pump 22 provided on the pipe 5.

In the other preferred embodiment of mechanism A shown in Figure 2, the first, second, and third containers 15, 16, and 17 are located outside the cooling tank 14, and a heat exchanger 23 immersed in the refrigerant 12 of the cooling tank 14 is provided between the control valves 19, 20, and 21 and the pump 22.

The tank 14 is provided with a refrigerant temperature control mechanism B which controls the temperature of the refrigerant 12. In the embodiment shown in Figure 1, the mechanism B consists of a temperature sensor 24, a stirrer 25, and an electric heater 26 immersed in the refrigerant 12. The sensor 24 and the heater 26 are connected to the control unit 18. Reference number 25' denotes a motor for driving the stirrer 25.

The tank 14 is also provided with a gas temperature controlling mechanism C. Liquid nitrogen is supplied from a refrigerant bomb 27 to a gas supply container 28 which is immersed in the refrigerant 12, and gaseous nitrogen is supplied to the nozzle 8 through the pipe 9 at a temperature which is controlled by a heat exchanger 29. Reference number 30 denotes a control valve provided in the pipe 5.

In order to cool and preserve an organ according to the method of the present invention with the apparatus described above, the valve 19 is opened by means of the control unit 18 and liquid blood substitute is supplied to the organ from the container 15 by operating the pump 22. The liquid flows into the artery 1a or portal vein 1b of the organ 1, perfused through the organ, and leaves via the vein 1c. The temperature of the liquid is gradually lowered during perfusion by controlling the temperature of the refrigerant 12 by means of the control mechanism B and the control unit 18.

Since the excised organ is initially at human body temperature (37°C), the perfusion liquid is also initially at this temperature. The blood within the organ is expelled and replaced by the perfusion liquid and perfusion is continued until the temperature of the liquid has been reduced to 2°C.

The rate at which the temperature of the perfusion liquid is reduced is controlled by adjusting the temperature of the refrigerant 12 in the tank 14 by means of the control mechanism B. Since the freezing point of the blood substitute is below 2°C, the first perfusion is used to reduce the temperature of the organ to 2°C. A perfusion time of about 10 minutes at a cooling rate of 3.5°C/minute is required to lower the temperature of the organ from 37°C to 2°C.

The temperature of the gaseous nitrogen emitted from the nozzle 8 is controlled by the heat exchanger 29; in this way the atmospheric temperature in the container 2 is maintained at the same temperature as the perfusion liquid in order to eliminate any thermal gradient between the internal and external temperatures of the organ. This is also carried out during the subsequent steps.

The method then proceeds to the second perfusion step, in which a liquid cryoprotective agent is supplied to the organ from the container 16 by closing the valve 19 and opening the valve 20. In this step, the perfusion liquid is initially at a temperature of 2°C. The temperature of the liquid is gradually lowered by means of the control mechanism B and perfusion is continued until the temperature of the liquid has been reduced to −4°C.

Since the freezing point of the cryoprotective agent is below −4°C, the second perfusion is used to reduce the temperature of the organ to −4°C. A perfusion time of about 20 minutes at a cooling rate of 0.3°C minute is required to lower the temperature of the organ from 2°C to −4°C; the moisture content of the organ is absorbed by the cryoprotective agent as a result of the osmotic pressure difference between the agent and the water in the cells of the organ.

The method then proceeds to the third perfusion step, in which the final perfusion liquid is supplied to the organ from the container 17 by closing the valve 20 and opening the valve 21. In this step, the temperature of the perfusion liquid is gradually lowered from −40°C to a temperature just above its freezing point, or until the perfusion liquid freezes and perfusion stops. In the case of ethanol, a preferred final perfusion liquid, the freezing point of which is about −80°C, the final temperature of the organ may be reduced to any temperature in the range −60°C to −80°C.

A perfusion time of about 30 minutes at a cooling rate of 0.1°C/minute is required to lower the temperature of the organ from −4°C to −37°C, and it takes a further 5 minutes at a cooling rate of 5°C/minute to reduce the temperature from −37°C to −60°C.

The frozen organ obtained after the three perfusion steps described above is then preserved in the frozen state. The frozen organ may be preserved in a refrigerator at about −80°C or may be preserved in liquefied gas such as liquid nitrogen. The frozen organ preserved in this way is then thawed when required for transplantation. Thawing is essentially performed by reversing the steps used in the method of freezing the organ.

The frozen organ is placed in the container 2 as shown in Figure 1. The atmospheric temperature in the container 2 is first lowered to the temperature of the organ, then the temperature is raised above the freezing point of the final perfusion liquid to thaw the frozen liquid present in the blood vessels of the organ. Valve 21 is then opened and the organ supplied with fresh final perfusion liquid by operating the pump 22. During the first thawing step, the temperature of the perfusion liquid is gradually raised by means of the control mechanism B until the liquid is at $-4°C$.

The method then proceeds to the second thawing step, in which the organ is perfused with the liquid cryoprotective agent. During this step, the temperature of the perfusion liquid is gradually raised from $-4°C$ to $2°C$.

The method then proceeds to the third thawing step, in which the liquid blood substitute is supplied to the organ and the temperature of the perfusing liquid is gradually raised from $2°C$ to body temperature. The organ, after passing through all the thawing steps, can be prepared for transplantation by supplying it with blood.

During the first step of the method of freezing according to the present invention, the liquid blood substitute is not merely perfused through the organ as in the method of the prior art in which the organ is perfused with choline at about $4°C$; in the present invention, the temperature of the liquid blood substitute is gradually lowered during perfusion from body temperature to $2°C$. Thus the organ is not subjected to an abrupt temperature change and nutrients equivalent to those in blood may be supplied to the organ at $2°C$ when the metabolism of the cells of the organ is still active.

During the second cooling step, the temperature of the cryoprotective perfusion liquid is further lowered to a temperature of $-4°C$. During this step, the moisture content of the cells is absorbed by the cryoprotective liquid as a result of the osmotic pressure difference between the liquid and the water in the cells of the organ. Consequently when the organ is frozen by the temperature fall in the third step, no moisture is present in the organ, and the organ can be frozen without causing cell necrocytosis.

During the third cooling step, cooling is achieved by lowering the temperature of the perfusion liquid from $-4°C$ to $-80°C$. Thus the temperature of the organ can be reduced to a very low temperature without subjecting the organ to an abrupt temperature fall in any of the successive steps.

By using the freezing method of the present invention, the organ can be semipermanently preserved in a frozen state without cell meronecrosis.

## Claims

1. A method of cooling and preserving an excised organ which comprises:

(a) perfusing the organ with a liquid blood substitute having a freezing point of less than $2°C$, the temperature of the substitute being reduced during perfusion from body temperature ($37°C$) to $2°C$,

(b) perfusing the organ with a liquid cryoprotective agent having a freezing point of less than $-4°C$, the temperature of the agent being reduced during perfusion from $2°C$ to $-4°C$,

(c) perfusing the organ with an inert liquid having a freezing point of not higher than $-60°C$, the temperature of the liquid being reduced during perfusion from $-4°C$ to from $-60°$ to $-80°C$, the lower temperature being at or above the freezing point of the liquid, and

(d) preserving the organ at a temperature at or below that achieved in step (c) until such time as the organ is required for transplantation.

2. A method of thawing an excised organ which has been cooled and preserved at a temperature of $-80°C$ or below, which comprises:

(a) perfusing the organ with an inert liquid having a freezing point of not higher than $-60°C$, the temperature of the liquid being increased during perfusion from a temperature of from $-60°$ to $-80°C$ to $4°C$,

(b) perfusing the organ with a liquid cryoscopic agent having a freezing point of less than $-4°C$, the temperature of the agent being increased during perfusion from $-4°C$ to $2°C$,

(c) perfusing the organ with a liquid blood substitute having a freezing point of less than $2°C$, the temperature of the substitute being increased during perfusion from $2°C$ to body temperature ($37°C$), and

(d) perfusing the organ with blood at body temperature.

3. A method according to claim 1 or 2, in which the excised organ is perfused in a temperature-controlled environment and the external temperature of the organ is maintained at the same temperature as the perfusing liquid.

4. A method according to any of claims 1 to 3, in which the liquid blood substitute is choline.

5. A method according to any of claims 1 to 4, in which the liquid cryoprotective agent is a 15% W/W aqueous solution of dimethyl sulphoxide or an aqueous solution of glycerin.

6. A method according to any of claims 1 to 5, in which the inert liquid is ethanol or diethyl ether.

7. An apparatus for treating an excised organ by a method according to claim 1 or 2, which comprises a perfusion unit (4) and a container (2) adapted to contain the organ, in which the perfusion unit is provided with

(a) a means of separately supplying liquids at controlled temperatures to the container (2), and

(b) a means of supplying gas at a controlled temperature to the container (2).

**Patentansprüche**

1. Verfahren zum Kühlen und Aufbewahren eines herausoperierten Organs, enthaltend:

(a) Durchschwemmen des Organs mit einem flüssigen Blutersatzstoff, der einen Gefrierpunkt von unter $2°C$ hat, wobei die Temperatur des Ersatzstoffs während des Durchschwemmens von der Körpertemperatur (37°C) auf 2°C herabgesetzt wird,

(b) Durchschwemmen des Organs mit einem flüssigen Gefrierschuttzmittel, das einen Gefrierpunkt von unter −4°C hat, wobei die Temperatur des Mittels während des Durchschwemmens von 2°C auf −4°C herabgesetzt wird,

(c) Durchschwemmen der Organs mit einer Inertflüssigkeit, die einen Gefrierpunkt von nicht höher als −60°C hat, wobei die Temperatur der Flüssigkeit während des Durchschwemmens von −4°C auf −60° bis −80°C herabgesetzt wird, wobei die untere Temperatur bei oder oberhalb dem Gefrierpunkt der Flüssigkeit liegt, und

(d) Aufbewahren des Organs bei einer Temperatur bei oder unterhalb der im Schritt (c) erreichten Temperatur bis zu dem Zeitpunkt, zu welchem das Organ für eine Transplantation benötigt wird.

2. Verfahren zum Auftauen eines herausoperierten Organs, das gekühlt und bei einer Temperatur von −80°C oder darunter aufbewahrt worden ist, enthaltend:

(a) Durchschwemmen des Organs mit einer Inertflüssigkeit, die einen Gefrierpunkt von nicht höher als −60°C hat, wobei die Temperatur der Flüssigkeit während des Durchschwemmens von einer Temperatur von −60° bis −80°C auf −4°C angehoben wird,

(b) Durchschwemmen des Organs mit einem flüssigen Gefrierschutzmittel, das einen Gefrierpunkt von unter −4°C hat, wobei die Temperatur des Mittels während des Durchschwemmens von −4°C auf 2°C angehoben wird,

(c) Durchschwemmen des Organs mit einem flüssigen Blutersatzstoff, der einen Gefrierpunkt von unter 2°C hat, wobei die Temperatur des Ersatzstoffs während des Durchschwemmens von 2°C auf Körpertemperatur (37°C) angehoben wird, und

(d) Durchschwemmen des Organs mit Blut bei Körpertemperatur.

3. Verfahren nach Anspruch 1 oder 2, bei dem das herausoperierte Organ in einer temperaturgeregelten Umgebung durchschwemmt wird und die Außentemperatur des Organs auf der gleichen Temperatur gehalten wird, wie die durchschwemmende Flüssigkeit.

4. Verfahren nach einem der Ansprüche 1 bis 3, bei dem der flüssige Blutersatzstoff Cholin ist.

5. Verfahren nach einem der Ansprüche 1 bis 4, bei dem das flüssige Gefrierschutzmittel eine 15% W/W wässrige Lösung von Dimethylsulphoxyd oder eine wässrige Lösung von Glycerin ist.

6. Verfahren nach einem der Ansprüche 1 bis 5, bei dem die Inertflüssigkeit Äthanol oder Diäthyl-äther ist.

7. Vorrichtung zum Behandeln eines herausoperierten Organs nach einem Verfahren nach Anspruch 1 oder 2, enthaltend eine Perfusionseinheit (4) und einen Behälter (2), der dazu eingerichtet ist, das Organ aufzunehmen, wobei die Perfusionseinheit versehen ist mit

(a) eine Einrichtung zum separaten Zuführen von Flüssigkeiten bei geregelten Temperaturen in den Behälter (2) und

(b) einer Einrichtung zum Zuführen von Gas mit einer geregelten Temperatur in den Behälter (2).

**Revendications**

1. Un procédé de refroidissement et de conservation d'un organe excisé qui comprend:

(a) la perfusion de l'organe avec un succédané liquide du sang ayant un point de congélation inférieur à 2°C, la température du succédané étant réduite pendant la perfusion de la température du corps (37°C) à 2°C,

(b) la perfusion de l'organe avec un agent cryoprotecteur liquide ayant un point de congélation inférieur à −4°C, la température de l'agent étant réduite pendant la perfusion de 2°C à −4°C,

(c) la perfusion de l'organe avec un liquide inerte ayant un point de congélation qui n'est pas supérieur à −60°C, la température du liquide étant réduite pendant la perfusion de −4°C à −60°C à −80°C, la température inférieure étant égale ou supérieure au point de congélation du liquide, et

(d) la conservation de l'organe à une température égale ou inférieure à celle obtenue dans le stade (c) jusqu'au moment où l'organe est nécessaire pour une transplantation.

2. Un procédé de décongélation d'un organe excisé qui a été refroidi et conservé à une température de −80°C ou en dessous qui comprend:

(a) la perfusion de l'organe avec un liquide inerte ayant un point de congélation qui n'est pas supérieur à −60°C, la température du liquide étant élevée pendant la perfusion d'une température de −60°C à −80°C à 4°C,

(b) la perfusion de l'organe avec un agent cryoprotecteur liquide ayant un point de congélation inférieur à −4°C, la température de l'agent étant élevée pendant la perfusion de −4°C à 2°C,

(c) la perfusion de l'organe avec un succédané liquide du sang ayant un point de congélation inférieur à 2°C, la température du succédane étant élevée pendant la perfusion de 2°C à la température du corps (37°C), et

(d) la perfusion de l'organe avec du sang à la température du corps.

3. Un procédé selon la revendication 1 ou 2, dans lequel l'organe excisé est perfusé dans un environnement à température contrôlée et la température externe de l'organe est maintenue à la même température que le liquide de perfusion.

4. Un procédé selon l'une quelconque des revendications 1 à 3, dans lequel le substitut liquide du sang est la choline.

5. Un procédé selon l'une quelconque des revendications 1 à 4, dans lequel l'agent cryoprotecteur liquide est une solution aqueuse à 15% p/p de diméthylsulfoxyde ou une solution aqueuse de glycérine.

6. Un procédé selon l'une quelconque des revendications 1 à 5, dans lequel le liquide inerte est de l'éthanol ou de l'éther diéthylique.

7. Un appareil pour le traitement d'un organe excisé selon un procédé selon la revendication 1 ou 2, qui comprend une unité de perfusion (4) et un récipient (2) conçu pour contenir l'organe, dans lequel l'unité de perfusion est munie de

(a) un dispositif pour alimenter séparément en liquides à des températures contrôlées le récipient (2), et

(b) un dispositif pour alimenter en gaz à une température contrôlée le récipient (2).

# FIG.1

# FIG.2